# EUROPÄISCHE PATENTSCHRIFT

(11) **EP 3 694 660 B1**
(45) Veröffentlichungstag und Bekanntmachung des Hinweises auf die Patenterteilung: **07.07.2021**
(21) Anmeldenummer: 18806965.2
(22) Anmeldetag: 11.10.2018
(51) Int. Cl.: B22C 9/06, B22D 18/04, B22D 18/08, B22D 30/00

(54) **GIESSVORRICHTUNG ZUM GIESSEN UNTER DRUCK**
CASTING DEVICE FOR CASTING UNDER PRESSURE
DISPOSITIF DE COULÉE POUR UNE COULÉE SOUS PRESSION

(30) Priorität: 13.10.2017 AT 508722017
(43) Veröffentlichungstag der Anmeldung: 19.08.2020
(73) Patentinhaber: Fill Gesellschaft m.b.H., 4942 Gurten (AT)
(72) Erfinder: RATHNER, Thomas, 4910 Ried im Innkreis (AT); BOINDECKER, Martin, 4942 Gurten (AT)
(74) Vertreter: Burger, Hannes
(86) Internationale Anmeldenummer: PCT/AT2018/060242
(87) Internationale Veröffentlichungsnummer: WO 2019/071285

(56) Entgegenhaltungen:
- EP-A1- 0 221 196
- DE-A1-102010 026 480
- JP-A- 2003 025 045

## Beschreibung

Die Erfindung betrifft eine Gießvorrichtung zum Gießen unter Druck, insbesondere Gegendruck- Kokillengießvorrichtung oder Niederdruck- Kokillengießvorrichtung.
Solche Gießvorrichtungen insbesondere zum Gießen unter einem durch eine Gasphase erzeugten Druck finden in der Gießereitechnik, insbesondere für die Herstellung von Gussstücken mit hohen physikalischen und mechanischen Kennwerten, insbesondere aus Leichtmetall-Legierungen, Anwendung.
Aus der WO 2011/003396 A1 ist eine Anlage zum Gießen unter Druck, mit wenigstens einer Gießvorrichtung aus einer unteren hermetisch abdichtbaren Kammer und einer oberen hermetisch abdichtbaren Kammer bekannt. Die Kammern sind durch eine Zwischenplatte bzw. Formaufspannplatte voneinander getrennt, wobei die untere Kammer einen Ofen mit Schmelze aufweist, und in der oberen Kammer eine in etwa horizontal geteilte Gießform angeordnet ist, die aus einer unteren Gießformhälfte und einer oberen Gießformhälfte angeordnet ist, besteht. Der Ofen mit Schmelze und die Gießform sind über wenigstens ein, an der Zwischenplatte bzw. Formaufspannplatte montiertes Steigrohr miteinander verbunden.

Das dem Fachmann bekannte Gegendruck-Kokillengießverfahren, auch bekannt als CPC (Counter Pressure Casting)-Gießverfahren, ist eine Weiterentwicklung des so genannten Niederdruck-Gießverfahrens und aus diversen Druckschriften, beispielsweise der EP 0 221 196 B1, der EP 0 564 774 B1 oder der DE 34 22 121 A1 bekannt. Im Gegensatz zum, dem Fachmann ebenfalls bekannten Niederdruck- Gießverfahren wird allerdings nicht nur der Gießofen, sondern auch die Kokille bzw. Gießform mit Druckgas beaufschlagt. Ein Vorrichtung mit den Merkmalen des Oberbegriffes von Anspruch 1 ist in der JP 200 3025045 A offenbart.

Der eigentliche Gießvorgang erfolgt sowohl beim Niederdruck-Gießverfahren als auch beim Gegendruck-Kokillengießverfahren mit Hilfe eines Steigrohres, durch das die Schmelze nach oben in die Kokille gefördert wird.

Die Druckbeaufschlagung der Schmelze im Ofen zum Hochfördern der Schmelze in die Kokille wird jedoch beim Gegendruck-Kokillengießverfahren durch eine Druckdifferenz herbeigeführt, indem der Gasdruck in der Kokille etwas abgesenkt wird. Dadurch entsteht ein Überdruck im Gießofen, der für das Hochsteigen der Schmelze in die Kokille ausreicht.

Beim Herstellen von verschiedensten Gusswerkstücken ist es notwendig, dass verschiedenste Gussformen an der Gießvorrichtung aufgenommen werden. Das Wechseln der Gussformen bzw. das Einschieben eines neuen Ofens mit Schmelze ist an den bekannten Gießvorrichtungen oft kompliziert und benötigt daher oft lange.

Der vorliegenden Erfindung liegt die Aufgabe zugrunde eine Gießvorrichtung zur Verfügung zu stellen, mittels welcher ein Rüsten von neuen Gussformen bzw. der Wechsel des Ofens vereinfacht durchgeführt werden kann.

Diese Aufgabe wird durch eine Vorrichtung gemäß den Ansprüchen gelöst.

Erfindungsgemäß ist eine Gießvorrichtung zum Gießen unter Druck, insbesondere Gegendruck- Kokillengießvorrichtung oder Niederdruck- Kokillengießvorrichtung vorgesehen. Diese umfasst:
- einen Ofen in dem ein Aufnahmeraum zur Aufnahme von Schmelze ausgebildet ist, wobei der Aufnahmeraum mit Druckluft beaufschlagbar ist;
- eine Gussform, welche einen unteren Gussformteil und einen oberen Gussformteil umfasst, wobei die beiden Gussformteile im zusammengefügten Zustand einen Formhohlraum bilden, wobei zumindest eines der beiden Gussformteile einen Medienkanal zur Führung eines Kühlmediums aufweist, wobei der Medienkanal mit zumindest einem Kühlmediumzuführschlauch strömungsverbunden ist;
- eine Zwischenplatte, die zwischen dem Ofen und der Gussform angeordnet ist;
- zumindest ein Steigrohr zum Leiten von Schmelze, mittels welchem der Aufnahmeraum des Ofens mit dem Formhohlraum der Gussform strömungsverbunden ist.
Zwischen dem Kühlmediumzuführschlauch und dem Medienkanal ist eine Kupplung mit einem ersten Kupplungsteil und einem zweiten Kupplungsteil ausgebildet, wobei die Kupplung mittels einem Aktor automatisiert einkuppelbar und auskuppelbar ist.

Die erfindungsgemäße Gießvorrichtung weist den Vorteil auf, dass durch die automatisierte Kupplung für das Kühlmedium ein vereinfachter Gussformwechsel ermöglicht wird. Dadurch kann Personal eingespart werden und somit die Betriebskosten gesenkt werden, bzw. die Fehleranfälligkeit vermindert werden. Außerdem kann der Vorgang zum Gussformwechsel deutlich verkürzt werden.

Weiters kann es zweckmäßig sein, wenn mehrere erste Kupplungsteile zu einem ersten Kupplungsblock und mehrere zweite Kupplungsteile zu einem zweien Kupplungsblock zusammengefasst sind, wobei der erste Kupplungsblock und der zweite Kupplungsblock mittels dem Aktor automatisiert einkuppelbar und auskuppelbar ist. Von Vorteil ist hierbei, dass durch das Vorsehen von Kupplungsblöcken mit jeweils einer Mehrzahl von Kupplungen, eine nur geringere Anzahl an Aktoren benötigt wird.

Ferner kann vorgesehen sein, dass das erste Kupplungsteil oder der erste Kupplungsblock an der Zwischenplatte angeordnet ist und dass das zweite Kupplungsteil oder der zweite Kupplungsblock am Kühlmediumschlauch angeordnet ist, wobei das zweite Kupplungsteil oder der zweite Kupplungsblock mittels dem Aktor zwischen einer Einkuppelstellung und einer Auskuppelstellung verschiebbar ist. Von Vorteil ist hierbei, dass mittels dem ersten Kupplungsteil bzw. dem ersten Kupplungsblock an der Zwischenplatte das Kühlmedium in weiterer Folge in das untere Gussformteil geleitet werden kann. Diese Maßnahme bringt außerdem den Vorteil mit sich, dass die Kühlmediumschläuche möglichst weit von den Gussformteilen entfernt angeordnet sind. Dadurch kann eine Wärmeübertragung von den Gussformteilen auf die Kühlmediumschläuche möglichst unterbunden werden und somit die Lebensdauer der Kühlmediumschläuche erhöht werden. Außerdem können die Kühlmediumschläuche durch diese Maßnahme möglichst kurz ausgeführt sein können.

Darüber hinaus kann vorgesehen sein, dass das erste Kupplungsteil an einer Umfangsfläche der Zwischenplatte angeordnet ist, wobei der erste Kupplungsblock durch einen Teilabschnitt der Zwischenplatte gebildet ist. Insbesondere kann vorgesehen sein, dass die Zwischenplatte bereichsweise als erster Kupplungsblock wirkt und die ersten Kupplungsteile direkt in der Zwischenplatte aufgenommen sind. Dies bringt den Vorteil mit sich, dass keine weiteren Bauteile zum Haltern bzw. zum Positionieren der ersten Kupplungsteile benötigt werden. Besonders die Umfangsfläche der Zwischenplatte eignet sich gut zur Aufnahme von mehreren ersten Kupplungsteilen. Durch eine derartige Ausgestaltung wird darüber hinaus erreicht, dass in der ausgekuppelten Stellung der Kupplungsteile die Zwischenplatte einfach aus ihrer Position entfernt werden kann.

Vorteilhaft ist auch eine Ausprägung, gemäß welcher vorgesehen sein kann, dass mehrere erste Kupplungsblöcke über die Umfangsfläche der Zwischenplatte verteilt angeordnet sind, wobei jedem der ersten Kupplungsblöcke ein zweiter Kupplungsblock zugeordnet ist, welcher jeweils mit einem eigenen Aktor gekoppelt ist. Durch diese Maßnahme kann eine große Anzahl an Kühlmittelschläuchen mit der Zwischenplatte und somit mit dem unteren Gussformteil verbunden werden.

Gemäß einer Weiterbildung ist es möglich, dass die Zwischenplatte zumindest einen Verbindungskanal aufweist, welcher sich vom ersten Kupplungsteil zu einem Koppelbereich mit dem unteren Gussformteil erstreckt, wobei im Koppelbereich der Verbindungskanal der Zwischenplatte in den Medienkanal des unteren Gussformteils mündet. Durch diese Maßnahme kann das Kühlmedium über die Zwischenplatte in den unteren Gussformteil geleitet werden.

Ferner kann es zweckmäßig sein, wenn der Aktor in Form eines Arbeitszylinders ausgebildet ist. Die Verwendung eines Arbeitszylinders bringt den Vorteil mit sich, dass dieser schnell zwischen einer ausgeschobenen Stellung und einer eingezogenen Stellung bewegt werden kann. Ein Arbeitszylinder ist darüber hinaus in dessen Aufbau einfach ausgeführt und weist somit eine nur geringe Fehleranfälligkeit auf.

Insbesondere kann es vorteilhaft sein, wenn der Arbeitszylinder in Form eines Pneumatikzylinders ausgeführt ist. Derartige Pneumatikzylinder können eine hohe Schaltgeschwindigkeit aufweisen.

Alternativ dazu kann vorgesehen sein, dass der Arbeitszylinder in Form eines Hydraulikzylinders ausgeführt ist. Derartige Hydraulikzylinder können eine hohe Schaltgeschwindigkeit bei gleichzeitiger guter Kraftübertragung aufweisen.

Darüber hinaus kann vorgesehen sein, dass der Aktor in Radialrichtung der Zwischenplatte wirkt.

Weiters kann vorgesehen sein, dass das erste Kupplungsteil oder der erste Kupplungsblock am unteren Gussformteil angeordnet ist und dass das zweite Kupplungsteil oder der zweite Kupplungsblock am Kühlmediumschlauch angeordnet ist, wobei das zweite Kupplungsteil oder der zweite Kupplungsblock mittels dem Aktor zwischen einer Einkuppelstellung und einer Auskuppelstellung verschiebbar ist.

Gemäß einer besonderen Ausprägung ist es möglich, dass in den Kupplungsblöcken auch weitere Medienleitungen, wie etwa Stromleitungen für Sensoren gekuppelt werden. Dies bringt den Vorteil mit sich, dass beispielsweise auch Temperatursensoren automatisiert gekuppelt werden können.

Entsprechend einer vorteilhaften Weiterbildung kann vorgesehen sein, dass in einem der Kupplungsblöcke ein Führungszapfen angeordnet ist, welcher mit einer Führungsausnehmung im korrespondierenden Kupplungsblock zusammenwirkt. Von Vorteil ist hierbei, dass durch diese Maßnahme eine exakte Führung der Kupplungsblöcke erreicht werden kann.

Insbesondere kann es vorteilhaft sein, wenn ein Lagesensor zur Erfassung der Position des zweiten Kupplungsblockes ausgebildet ist. Durch diese Maßnahme kann das korrekte Einkuppeln bzw. das korrekte Auskuppeln des zweiten Kupplungsblocks erfasst werden. Dies trägt dazu bei, dass Beschädigungen in der Gießvorrichtung möglichst hintangehalten werden.

Ferner kann vorgesehen sein, dass das erste Kupplungsteil oder der erste Kupplungsblock an einer Aufnahmeplatte für das obere Gussformteil angeordnet ist und dass das zweite Kupplungsteil oder der zweite Kupplungsblock am Kühlmediumschlauch angeordnet ist, wobei das zweite Kupplungsteil oder der zweite Kupplungsblock mittels dem Aktor zwischen einer Einkuppelstellung und einer Auskuppelstellung verschiebbar ist. Durch diese Maßnahme kann auch das obere Gussformteil mit einem Kühlmedium versorgt werden, wobei dieses automatisiert eingekuppelt bzw. ausgekuppelt werden kann.

Darüber hinaus kann vorgesehen sein, dass mehrere der Kühlmediumschläuche zum Zuführen des frischen Kühlmediums in einem gemeinsamen zweiten Kupplungsblock zusammengefasst sind und dass mehrere der Kühlmediumschläuche zum Abführen des bereits durch das Gussformteil geführten Kühlmediums in einem weiteren gemeinsamen zweiten Kupplungsblock zusammengefasst sind. Dies bringt den Vorteil mit sich, dass die Kühlmediumschläuche für das frische Kühlmedium und die Kühmediumschläuche für das bereits erhitzte Kühlmedium nicht an einem gemeinsamen Kupplungsblock angeordnet sind, sondern voneinander beabstandet angeordnet sind. Dadurch werden die Kühlmediumschläuche für das frische Kühlmedium nicht durch die Abwärme der Kühmediumschläuche für das bereits erhitzte Kühlmedium erwärmt. Dadurch kann die Effizienz der Kühlung gesteigert werden.

Die Kühlmediumschläuche sind vorzugsweise flexibel ausgebildet, sodass das zweite Kupplungsteil, welches mit den Kühlmediumschläuchen gekoppelt ist, zwischen der Einkuppelstellung und der Auskuppelstellung verschoben werden kann.

Als Kühlmedium kann eine Flüssigkeit, wie etwa Kühlwasser verwendet werden. Weiters ist es auch denkbar, dass als Kühlmedium ein Gas verwendet wird. Darüber hinaus ist es auch denkbar, dass als Kühlmedium ein Aerosol verwendet wird.

Ferner kann vorgesehen sein, dass in den Kupplungsteilen ein Verschlussventil angeordnet ist, welches im nicht gekuppelten Zustand der Kupplungsteile einen Mediumaustritt aus den Kupplungsteilen verhindert. Dies bringt den Vorteil mit sich, das die Maschinensicherheit verbessert werden kann.

Erfindungsgemäß ist auch ein Verfahren zum Manipulieren eines Gussformteiles an einer Gießvorrichtung vorgesehen. Das erste Kupplungsteil und das zweite Kupplungsteil werden vor dem Manipulieren des Gussformteiles automatisiert ausgekuppelt. Dies bringt den Vorteil mit sich, dass der Manipulationsvorgang beschleunigt erfolgen kann und somit die Nebenzeiten verringert werden können.

Ferner kann vorgesehen sein, dass die Kupplungsteile vor dem Auskuppeln mit einem Gas durchspült werden. Dies bringt den Vorteil mit sich, dass das durch diese Maßnahme die Maschinensicherheit erhöht wird, da die Gefahr von Wasserdampfexplosionen vermindert wird. Insbesondere kann dadurch erreicht werden, dass beim Auskuppeln der beiden Kupplungsteile nicht ungewollt ein Aerosol, oder reines Wasser aus den Kupplungsteilen austritt, welches in Verbindung mit der heißen Aluminiumschmelze zu einem Sicherheitsrisiko führen würde.

Außerdem kann vorgesehen sein, dass das Manipulieren des Gussformteiles darin besteht, dass dieses um eine Schwenkachse geschwenkt wird. Dadurch kann das Gussformteil zur Reinigung Formhohlraumseite der Gussformteile erleichtert für den Maschinenbediener zugänglich sein.

Alternativ dazu kann vorgesehen sein, dass das Manipulieren des Gussformteiles darin besteht, dass dieses von der Gießvorrichtung entfernt wird und gegen ein anderes ausgetauscht wird.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung eines ersten Ausführungsbeispiels einer Gießvorrichtung, welche als Niederdruck- Kokillengießvorrichtung ausgebildet ist;
- Fig. 2: eine schematische Darstellung eines zweiten Ausführungsbeispiels einer Gießvorrichtung, welche als Gegendruck- Kokillengießvorrichtung ausgebildet ist;
- Fig. 3: eine Draufsicht auf eine Zwischenplatte der Gießvorrichtung mit daran angeordneten Kupplungen in geöffneter Stellung;
- Fig. 4: eine Draufsicht auf eine Zwischenplatte der Gießvorrichtung mit daran angeordneten Kupplungen in geschlossener Stellung;
- Fig. 5: eine schematische Darstellung eines weiteren Ausführungsbeispiels einer Gießvorrichtung mit direkt an die Gießformhälften gekuppelten Kühlmediumschläuchen;
- Fig. 6: eine perspektivische Ansicht eines Ausführungsbeispiels eines Kupplungsblockes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

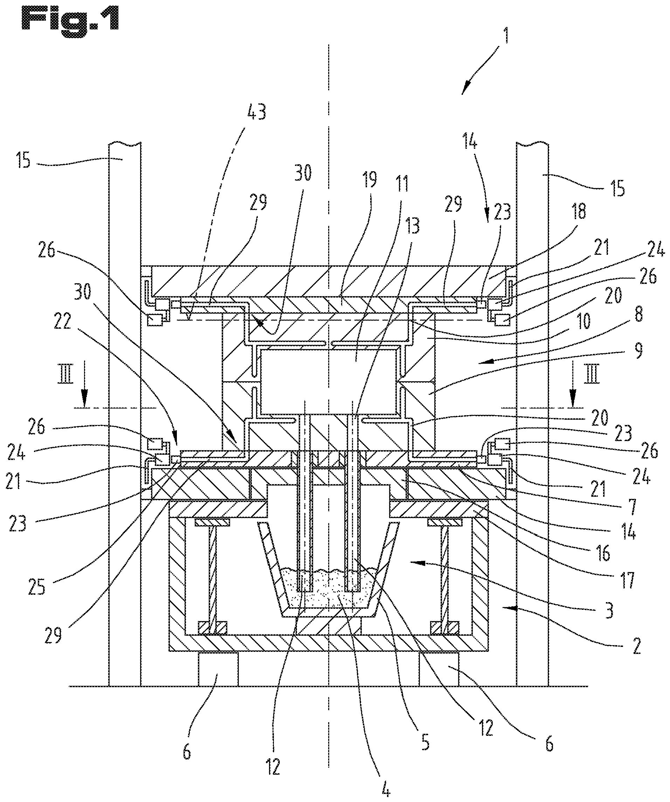

Fig. 1 zeigt eine schematische Darstellung eines Ausführungsbeispiels einer Gießvorrichtung 1. Die Gießvorrichtung 1 ist in diesem Ausführungsbeispiel als Niederdruck-Kokillengießvorrichtung ausgebildet.

Die Gießvorrichtung 1 umfasst einen Ofen 2 in dem ein Aufnahmeraum 3 zur Aufnahme von Schmelze 4 ausgebildet ist. Insbesondere kann vorgesehen sein, dass im Ofen 2 ein Behältnis 5 angeordnet ist, in welchem die Schmelze 4 aufgenommen wird. Das Behältnis 5 kann aus einem keramischen Werkstoff gebildet sein, welcher eine hohe Temperaturbeständigkeit aufweist. Der Ofen 2 kann insbesondere dazu dienen, um die Schmelze 4 auf einem hohen Temperaturniveau zu halten, sodass sie im geschmolzenen Zustand verbleibt.

Weiters kann vorgesehen sein, dass der Ofen 2 mit einem Schienensystem 6 gekoppelt ist, sodass er aus dem Wirkbereich der Gießvorrichtung 1 herausgefahren werden kann. Somit kann der Ofen 2 beispielsweise zum Nachfüllen von Schmelze 4 aus dem Wirkbereich der Gießvorrichtung 1 entfernt werden.

Weiters ist eine Zwischenplatte 7 ausgebildet, welche an der Gießvorrichtung 1 oberhalb des Ofens 2 angeordnet ist. Die Zwischenplatte 7 kann entweder als eigener Bauteil oder als integraler Bauteil des Ofens 2 ausgebildet sein. Oberhalb der Zwischenplatte 7 ist eine Gussform 8 angeordnet, welche einen unteren Gussformteil 9 und einen oberen Gussformteil 10 aufweist. Mit andern Worten ausgedrückt ist die Zwischenplatte 7 zwischen dem Ofen 2 und der Gussform 8, insbesondere zwischen dem Ofen 2 und dem unteren Gussformteil 9 angeordnet.

Die beiden Gussformteile 9, 10 bilden einen Formhohlraum 11 aus, welcher zur Aufnahme der Schmelze 4 und zur Formgebung des Gusswerkstückes dient.

Die Gussform 8 kann beispielsweise in Form einer Kokille ausgebildet sein, welche zum Abgießen von mehreren tausend Werkstücken geeignet ist.

Weiters ist zumindest ein Steigrohr 12 ausgebildet, welches in den Aufnahmeraum 3 des Ofens 2 hineinragt und die Zwischenplatte 7 durchdringt. Wie aus Fig. 1 ersichtlich, können auch mehrere Steigrohre 12 ausgebildet sein.

Der Ofen 2 weist darüber hinaus eine nicht dargestellte Druckluftzufuhröffnung auf, durch welche Druckluft in den Aufnahmeraum 3 des Ofens 2 eingebracht werden kann. Durch beaufschlagen des Aufnahmeraums 3 des Ofens 2 mit Druckluft wird die Schmelze 4 über das Steigrohr 12 in den Formhohlraum 11 gedrückt.

Der untere Gussformteil 9 kann direkt an das Steigrohr 12 anschließen und einen Schmelzeeinlauf 13 aufweisen, in welchen das Steigrohr 12 mündet.

Weiters kann eine untere Abhebekonstruktion 14 vorgesehen sein, die mit Hebesäulen 15 gekoppelt sein kann. Die untere Abhebekonstruktion 14 kann mittels einer nicht dargestellten Antriebseinheit in Vertikalrichtung verschiebbar an den Hebesäulen 15 angeordnet sein.

Weiters kann vorgesehen sein, dass die Zwischenplatte 7 an der unteren Abhebekonstruktion 14 aufliegt. Somit kann die Zwischenplatte 7 mittels der unteren Abhebekonstruktion 14 vom Ofen 2 abgehoben werden.

Weiters kann auch vorgesehen sein, dass der untere Gussformteil 9 direkt an der Zwischenplatte 7 befestigt ist.

Außerdem kenn eine Steigrohraufnahmeplatte 16 vorgesehen sein, in welcher die Steigrohre 12 aufgenommen sein können. Die Steigrohraufnahmeplatte 16 kann sich an einer Ofenabdeckplatte 17 abstützen bzw. an dieser aufliegen. Insbesondere kann vorgesehen sein, dass die Steigrohraufnahmeplatte 16 unterhalb der Zwischenplatte 7 angeordnet ist.

Weiters kann vorgesehen sein, dass die Ofenabdeckplatte 17 mit der unteren Abhebekonstruktion 14 verriegelt werden kann, sodass die Ofenabdeckplatte 17 mitsamt der Steigrohraufnahmeplatte 16 und den darin angeordneten Steigrohren 12 vom Ofen 2 abgehoben werden kann. Dadurch wird ein Ofenwechsel ermöglicht.

Außerdem kann eine obere Abhebekonstruktion 18 vorgesehen sein, welche ebenfalls vertikal verschiebbar mit den Hebesäulen 15 gekoppelt sein kann. An der oberen Abhebekonstruktion 18 kann eine Aufnahmeplatte 19 angeordnet sein, an welcher das obere Gussformteil 10 aufgenommen sein kann.

Weiters ist es auch denkbar, dass das obere Gussformteil 10 mit dem unteren Gussformteil 9 verriegelt werden kann, sodass beide Gussformteile 9, 10 gemeinsam mit der oberen Abhebekonstruktion 18 von der Zwischenplatte 7 abgehoben werden können.

Wie aus Fig. 1 ersichtlich, kann vorgesehen sein, dass im unteren Gussformteil 9 und/oder im oberen Gussformteil 10 ein Medienkanal 20 zum Führung des Kühlmediums ausgebildet ist.

Weiters ist ein Kühlmediumschlauch 21 vorgesehen, welcher zum Zuführen des Kühlmediums zum Medienkanal 20 dient. Weiters ist vorgesehen, dass der Kühlmediumschlauch 21 mittels einer Kupplung 22 einkuppelbar bzw. auskuppelbar ist.

Die Kupplung 22 weist einen ersten Kupplungsteil 23 und einen zweiten Kupplungsteil 24 auf. Das erste Kupplungsteil 23 ist im vorliegenden Ausführungsbeispiel an der Zwischenplatte 7 angeordnet.

Insbesondere ist vorgesehen, dass das erste Kupplungsteil 23 an einer Umfangsfläche 25 der Zwischenplatte 7 angeordnet ist. Im vorliegenden Ausführungsbeispiel gemäß Fig. 1 sind das erste Kupplungsteil 23 und das zweite Kupplungsteil 24 in einer nicht gekuppelten Stellung dargestellt.

Analog zur Befestigung des ersten Kupplungsteils 23 an der Zwischenplatte 7 kann auch vorgesehen sein, dass an der Aufnahmeplatte 19 ein erstes Kupplungsteil 23 vorgesehen ist, welches mit einem zweiten Kupplungsteil 24 zusammenwirkt.

Alle Ausführungsformen der folgenden Beschreibung, welche anhand des ersten Kupplungsteils 23 an der Zwischenplatte 7 beschrieben werden, gelten analog auch für das erste Kupplungsteil 23 an der Aufnahmeplatte 19, welche mit dem oberen Gussformteil 10 gekoppelt ist.

Wie in Fig. 1 schematisch angedeutet, ist ein Aktor 26 vorgesehen, mittels welchem das erste Kupplungsteil 23 und das zweite Kupplungsteil 24 automatisiert einkuppelbar und auskuppelbar sind. Insbesondere kann hierbei vorgesehen sein, dass der Aktor 26 auf das zweite Kupplungsteil 24 wirkt und dieses zwischen einer Einkuppelstellung 27 und einer Auskuppelstellung 28 verschiebt. In der Darstellung in Fig. 1 befindet sich das zweite Kupplungsteil 24 in seiner Auskuppelstellung 28.

Weiters kann vorgesehen sein, dass in der Zwischenplatte 7 ein Verbindungskanal 29 ausgebildet ist, mittels welchem das erste Kupplungsteil 23 mit dem Medienkanal 20 strömungsverbunden ist. Insbesondere kann hierbei vorgesehen sein, dass zwischen der Zwischenplatte 7 und dem unteren Gussformteil 9 ein Koppelbereich 30 ausgebildet ist, in welchem der Verbindungskanal 29 in den Medienkanal 20 mündet.

Analog dazu kann vorgesehen sein, dass in der Aufnahmeplatte 19 ebenfalls ein Verbindungskanal 29 vorgesehen ist, welcher das erste Kupplungsteil 23 mit dem Medienkanal 20 des oberen Gussformteils 10 verbindet. Hierbei kann ebenfalls ein Koppelbereich 30 vorgesehen sein, in welchem der Verbindungskanal 29 in den Medienkanal 20 mündet.

Im Koppelbereich 30 sowohl des oberen Gussformteils 10 als auch des unteren Gussformteils 9 kann eine Dichtung zum Aufbringen einer Dichtwirkung zwischen unterem Gussformteil 9 und der Zwischenplatte 7 bzw. zwischen dem oberen Gussformteil 10 und der Aufnahmeplatte 19 vorgesehen sein.

Insbesondere kann vorgesehen sein, dass der Medienkanal 20 im Gussformteil 9, 10 einen Durchlauf zur Durchströmung mittels einem Kühlmedium bildet. Somit kann vorgesehen sein, dass jedem Medienkanal 20 an einem ersten Austritt aus dem Gussformteil 9, 10 ein erstes Kupplungsteil 23 zum Einführen des Kühlmediums zugeordnet ist und an einem zweiten Austritt aus dem Gussformteil 9, 10 ein weiteres erstes Kupplungsteil 23 zum Ableiten des Kühlmediums zugeordnet ist. Diese beiden ersten Kupplungsteile 23 sind örtlich voneinander entfernt angeordnet. Natürlich kann vorgesehen sein, dass hierbei zwischen dem Medienkanal 20 und dem ersten Kupplungsteil 23 die Zwischenplatte 7 bzw. die Aufnahmeplatte 19 zwischengeschalten ist.

Weiters kann vorgesehen sein, dass das obere Gussformteil 10 mitsamt der Aufnahmeplatte 19 um eine Schwenkachse 43 nach unten schwenkbar ist. Die Schwenkachse 43 kann hierbei an einem Seitenrand der Gießvorrichtung 1 angeordnet sein, sodass das obere Gussformteil 10 beim nach unten schwenken gleichzeitig nach außen schwenkt. Durch diese Maßnahme kann das obere Gussformteil 10 zur Reinigung durch den Benutzer erleichtert zugänglich sein. Insbesondere kann vorgesehen sein, dass das obere Gussformteil 10 aus der horizontalen Lage, wie sie in Fig. 1 dargestellt ist, in eine vertikale, oder annähernd vertikale Lage nach unten geschwenkt wird. Der Schwenkwinkel aus der horizontalen Lage kann hierbei zwischen 70° und 110° betragen.

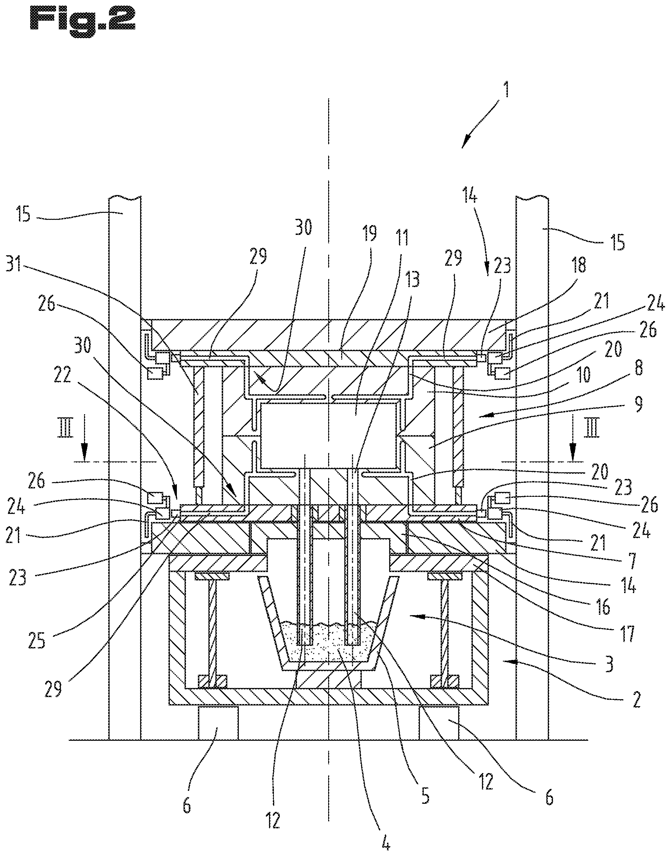

In der Fig. 2 ist eine weitere und gegebenenfalls für sich eigenständige Ausführungsform der Gießvorrichtung 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in den vorangegangenen Fig. 1 hingewiesen bzw. Bezug genommen.

Im Ausführungsbeispiel nach Fig. 2 ist die Gießvorrichtung 1 als Gegendruckgießvorrichtung ausgebildet. Eine derartige Gegendruckgießvorrichtung 1 kann grundsätzlich denselben Aufbau wie die in Fig. 1 dargestellte Niederdruckgießvorrichtung 1 aufweisen, wobei jedoch zusätzlich zu den bereits beschriebenen Bauteilen eine Einhausung 31 für die Gussform 8 vorgesehen sein kann, um den Gegendruck aufbringen zu können.

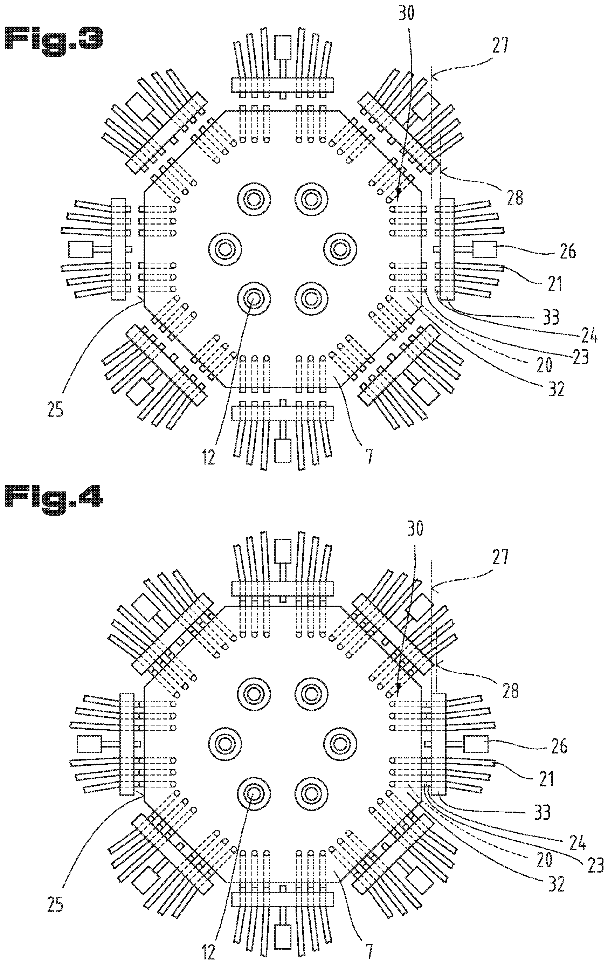

In den Figuren 3 und 4 ist ein Ausführungsbeispiel der Zwischenplatte 7 bzw. der Kupplungen 22 in einer schematischen Draufsicht dargestellt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in den vorangegangenen Fig. 1 hingewiesen bzw. Bezug genommen. Insbesondere ist hier eine Ansicht gemäß der Linie III-III aus Fig. 1 gewählt, wobei das untere Gussformteil nicht dargestellt ist.

In der Fig. 3 befinden sich die zweiten Kupplungsteile 24 in der Auskuppelstellung 28 und in der Fig. 4 befinden sich die zweiten Kupplungsteile 24 in der Einkuppelstellung 27. In der Einkuppelstellung 27 gemäß Fig. 4 sind die ersten Kupplungsteile 23 mit den zweiten Kupplungsteilen 24 strömungsverbunden. In der Auskuppelstellung 28 gemäß Fig. 3 sind die ersten Kupplungsteile 23 und die zweiten Kupplungsteile 24 voneinander beabstandet, sodass die Zwischenplatte 7 abgehoben werden kann.

Wie aus den Figuren 3 und 4 ersichtlich, kann vorgesehen sein, dass mehrere der ersten Kupplungsteile 23 an einem ersten Kupplungsblock 32 angeordnet sind und dass mehrere der zweiten Kupplungsteile 24 an einem zweiten Kupplungsblock 33 angeordnet sind. Der erste Kupplungsblock 32 kann direkt durch die Zwischenplatte 7 gebildet sein, wobei die einzelnen ersten Kupplungsteile 23 direkt in der Umfangsfläche 25 der Zwischenplatte 7 aufgenommen sein können.

Der zweite Kupplungsblock 33 kann mit dem Aktor 26 gekoppelt sein und somit zwischen der Einkuppelstellung 27 und der Auskuppelstellung 28 verschoben werden. Durch die Ausbildung des zweiten Kupplungsblockes 33 können mit nur einem einzigen Aktor 26 mehrere der zweiten Kupplungsteile 24 gemeinsam zwischen der Einkuppelstellung 27 und der Auskuppelstellung 28 verschoben werden.

Weiters kann vorgesehen sein, dass über die Umfangsfläche 25 der Zwischenplatte 7 verteilt mehrere der zweiten Kupplungsblöcke 33 angeordnet sind, wobei diese jeweils mittels einem eigenen Aktor 26 bewegt werden können. Dadurch kann eine Vielzahl von Medienkanälen 20 mit einem Kühlmedium versorgt werden.

Insbesondere kann vorgesehen sein, dass jeweils an einem zweiten Kupplungsblock 33 mehrere Kühlmediumschläuche 21 zum Zuführen des abgekühlten Kühlmediums angeschlossen sind und dass in einem weiteren der zweiten Kupplungsblöcke 33 mehrere Kühlmediumschläuche 21 zum Abführen des durch den Gussformteil 9, 10 und somit erhitzten Kühlmediums ausgebildet sind.

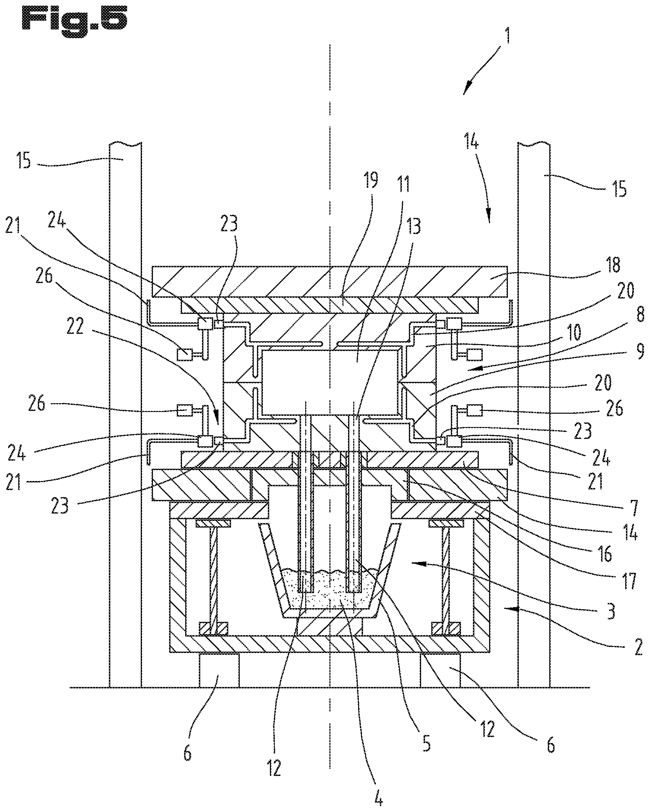

In der Fig. 5 ist eine weitere und gegebenenfalls für sich eigenständige Ausführungsform der Gießvorrichtung 1 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, kann vorgesehen sein, dass die ersten Kupplungsteile 23 direkt am unteren Gussformteil 9 bzw. am oberen Gussformteil 10 angeordnet sind und somit direkt in die Medienkanäle 20 einmünden. Dies ist insbesondere bei Niederdruckgießvorrichtungen 1 möglich, bei welchen die Gussformteile 9, 10 frei zugängig sind.

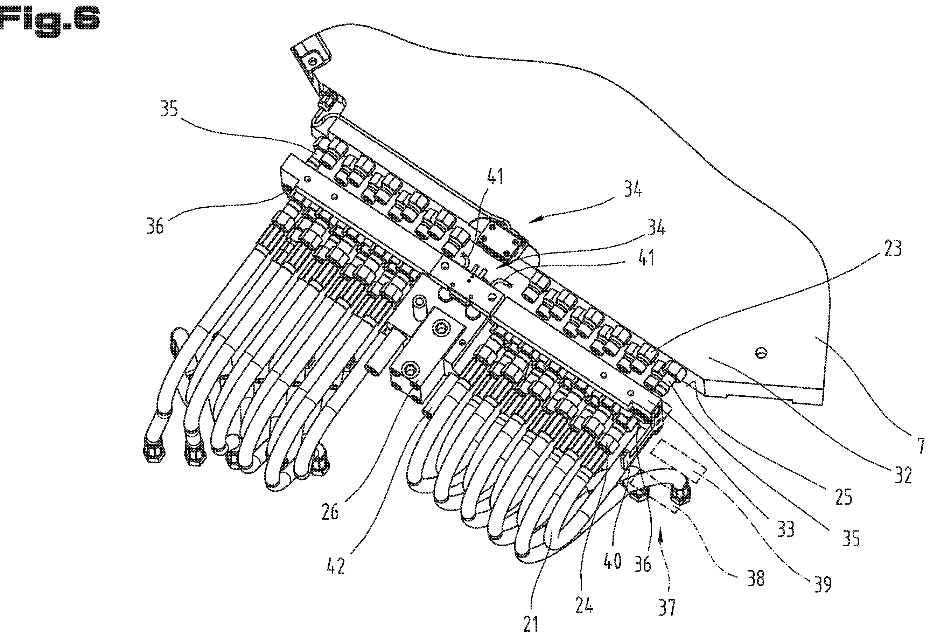

Fig. 6 zeigt ein weiteres Ausführungsbeispiel des ersten Kupplungsblockes 32 und des zweiten Kupplungsblockes 33. Wie aus Fig. 6 ersichtlich, kann vorgesehen sein, dass über mehrere Ebenen verteilt nebeneinander liegend mehrere der ersten Kupplungsteile 23 am ersten Kupplungsblock 32 angeordnet sind. Analog dazu können mehrere der zweiten Kupplungsteile 24 am zweiten Kupplungsblock 33 angeordnet sein.

Weiters kann vorgesehen sein, dass an den Kupplungsblöcken 32, 33 weitere Medienleitungen 34, wie etwa Stromleitungen oder Datenübertragungsleitungen für Sensoren angeordnet sein können. Diese weiteren Medienleitungen 34 können somit gleichzeigt mit den Kupplungen 22 für die Kühlmittelleitung gekoppelt werden.

Weiters kann vorgesehen sein, dass am ersten Kupplungsblock 32 ein oder mehrere Führungszapfen 35 angeordnet sind, welche mit einer Führungsausnehmung 36 im zweiten Kupplungsblock 33 korrespondieren. Mittels der Führungszapfen 35 kann eine gute Positionierung des zweiten Kupplungsblockes 33 relativ zum ersten Kupplungsblock 32 erreicht werden.

In Fig. 6 ist ein Lagesensor 37 schematisch dargestellt, welcher zum Erfassen der Einkuppelstellung 27 bzw. der Auskuppelstellung 28 dient. Der Lagesensor 37 kann ein erstes Sensorelement 38 und ein zweites Sensorelement 39 umfassen, welche an der unteren Anhebekonstruktion 14 angeordnet sein können. Weiters kann ein Geber 40 vorgesehen sein, welcher am zweiten Kupplungsblock 33 angeordnet ist und dessen Position mittels dem ersten Sensorelement 38 bzw. mittels dem zweiten Sensorelement 39 erfasst werden kann. Die Sensorelemente 38, 39 können hierbei als induktive Sensoren ausgebildet sein. Alternativ dazu ist es auch denkbar, dass die Sensorelemente 38, 39 beispielsweise durch Endschalter gebildet sind.

Wie schematisch angedeutet, kann weiters vorgesehen sein, dass im Bereich der Kupplungen 22 eine oder mehrere Reinigungsdüsen 41 angeordnet sind, welche zur Abgabe eines Druckluftstoßes dienen, um die beiden Kupplungsteile 23, 24 vor dem Kuppeln miteinander vor etwaigen Verschmutzungen, wie etwa Staub, abzureinigen.

Weiters kann vorgesehen sein, dass der zweite Kupplungsblock 33 mittels einer Linearführung 42 geführt wird, sodass der Aktor 26 ausschließlich zur Positionierung und nicht zur gleichzeitigen Führung des zweiten Kupplungsblockes 33 dient.

Der zweite Kupplungsblock 33 kann durch einen Vollmaterialblock gebildet sein, welcher an einer Seite Einschraubstellen für die zweiten Kupplungsteile 24 und an einer weiteren Seite Einschraubstellen für die Kühlmediumschläuche 21 aufweist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Gießvorrichtung | 31 | Einhausung |
| 2 | Ofen | 32 | erster Kupplungsblock |
| 3 | Aufnahmeraum | 33 | zweiter Kupplungsblock |
| 4 | Schmelze | 34 | weitere Medienleitung |
| 5 | Behältnis | 35 | Führungszapfen |
| 6 | Schienensystem | 36 | Führungsausnehmung |
| 7 | Zwischenplatte | 37 | Lagesensor |
| 8 | Gussform | 38 | erstes Sensorelement |
| 9 | unterer Gussformteil | 39 | zweites Sensorelement |
| 10 | oberer Gussformteil | 40 | Geber |
| 11 | Formhohlraum | 41 | Reinigungsdüse |
| 12 | Steigrohr | 42 | Linearführung |
| 13 | Schmelzeeinlauf | 43 | Schwenkachse |
| 14 | untere Abhebekonstruktion | | |
| 15 | Hebesäule | | |
| 16 | Steigrohraufnahmeplatte | | |
| 17 | Ofenabdeckplatte | | |
| 18 | obere Abhebekonstruktion | | |
| 19 | Aufnahmeplatte | | |
| 20 | Medienkanal | | |
| 21 | Kühlmediumschlauch | | |
| 22 | Kupplung | | |
| 23 | erster Kupplungsteil | | |
| 24 | zweiter Kupplungsteil | | |
| 25 | Umfangsfläche | | |
| 26 | Aktor | | |
| 27 | Einkuppelstellung | | |
| 28 | Auskuppelstellung | | |
| 29 | Verbindungskanal | | |
| 30 | Koppelbereich | | |

## Patentansprüche

1. Gießvorrichtung (1) zum Gießen unter Druck, insbesondere Gegendruck- Kokillengießvorrichtung oder Niederdruck- Kokillengießvorrichtung, umfassend:
- einen Ofen (2) in dem ein Aufnahmeraum (3) zur Aufnahme von Schmelze (4) ausgebildet ist, wobei der Aufnahmeraum (3) mit Druckluft beaufschlagbar ist;
- eine Gussform (8), welche einen unteren Gussformteil (9) und einen oberen Gussformteil (10) umfasst, wobei die beiden Gussformteile (9, 10) im zusammengefügten Zustand einen Formhohlraum (11) bilden, wobei zumindest eines der beiden Gussformteile (9, 10) einen Medienkanal (20) zur Führung eines Kühlmediums aufweist, wobei der Medienkanal (20) mit zumindest einem Kühlmediumschlauch (21) strömungsverbunden ist;
- eine Zwischenplatte (7), die zwischen dem Ofen (2) und der Gussform (8) angeordnet ist;
- zumindest ein Steigrohr (12) zum Leiten von Schmelze (4), mittels welchem der Aufnahmeraum (3) des Ofens (2) mit dem Formhohlraum (11) der Gussform (8) strömungsverbunden ist;
wobei
zwischen dem Kühlmediumschlauch (21) und dem Medienkanal (20) eine Kupplung (22) mit einem ersten Kupplungsteil (23) und einem zweiten Kupplungsteil (24) ausgebildet ist, **dadurch gekennzeichnet, dass** die Kupplung (22) mittels einem Aktor (26) automatisiert einkuppelbar und auskuppelbar ist.

2. Gießvorrichtung nach Anspruch 1, **dadurch gekennzeichnet, dass** mehrere erste Kupplungsteile (23) zu einem ersten Kupplungsblock (32) und mehrere zweite Kupplungsteile (24) zu einem zweiten Kupplungsblock (33) zusammengefasst sind, wobei der erste Kupplungsblock (32) und der zweite Kupplungsblock (33) mittels dem Aktor (26) automatisiert einkuppelbar und auskuppelbar ist.

3. Gießvorrichtung nach Anspruch 1 oder 2, **dadurch gekennzeichnet, dass** das erste Kupplungsteil (23) oder der erste Kupplungsblock (32) an der Zwischenplatte (7) angeordnet ist und dass das zweite Kupplungsteil (24) oder der zweite Kupplungsblock (33) am Kühlmediumschlauch (21) angeordnet ist, wobei das zweite Kupplungsteil (24) oder der zweite Kupplungsblock (33) mittels dem Aktor (26) zwischen einer Einkuppelstellung (27) und einer Auskuppelstellung (28) verschiebbar ist.

4. Gießvorrichtung nach Anspruch 3, **dadurch gekennzeichnet, dass** das erste Kupplungsteil (23) an einer Umfangsfläche (25) der Zwischenplatte (7) angeordnet ist, wobei der erste Kupplungsblock (32) durch einen Teilabschnitt der Zwischenplatte (7) gebildet ist.

5. Gießvorrichtung nach Anspruch 4, **dadurch gekennzeichnet, dass** mehrere erste Kupplungsblöcke (32) über die Umfangsfläche (25) der Zwischenplatte (7) verteilt angeordnet sind, wobei jedem der ersten Kupplungsblöcke (32) ein zweiter Kupplungsblock (33) zugeordnet ist, welcher jeweils mit einem eigenen Aktor (26) gekoppelt ist.

6. Gießvorrichtung nach einem der vorhergehenden Ansprüche, **dadurch gekennzeichnet, dass** die Zwischenplatte (7) zumindest einen Verbindungskanal (29) aufweist, welcher sich vom ersten Kupplungsteil (23) zu einem Koppelbereich (30) mit dem unteren Gussformteil (9) erstreckt, wobei im Koppelbereich (30) der Verbindungskanal (29) der Zwischenplatte (7) in den Medienkanal (20) des unteren Gussformteils (9) mündet.

7. Gießvorrichtung nach einem der vorhergehenden Ansprüche, **dadurch gekennzeichnet, dass** der Aktor (26) in Form eines Arbeitszylinders ausgebildet ist.

8. Gießvorrichtung nach einem der vorhergehenden Ansprüche, **dadurch gekennzeichnet, dass** der Aktor (26) in Radialrichtung der Zwischenplatte (7) wirkt.

9. Gießvorrichtung nach einem der Ansprüche 6 bis 8, **dadurch gekennzeichnet, dass** das erste Kupplungsteil (23) oder der erste Kupplungsblock (32) am unteren Gussformteil (9) angeordnet ist und dass das zweite Kupplungsteil (24) oder der zweite Kupplungsblock (33) am Kühlmediumschlauch (21) angeordnet ist, wobei das zweite Kupplungsteil (24) oder der zweite Kupplungsblock (33) mittels dem Aktor (26) zwischen einer Einkuppelstellung (27) und einer Auskuppelstellung (28) verschiebbar ist.

10. Gießvorrichtung nach einem der Ansprüche 2 bis 9, **dadurch gekennzeichnet, dass** in den Kupplungsblöcken (32, 33) auch weitere Medienleitungen (34), wie etwa Stromleitungen für Sensoren gekuppelt werden.

11. Gießvorrichtung nach einem der vorhergehenden Ansprüche, **dadurch gekennzeichnet, dass** in einem der Kupplungsblöcke (32, 33) ein Führungszapfen (35) angeordnet ist, welcher mit einer Führungsausnehmung (36) im korrespondierenden Kupplungsblock (32, 33) zusammenwirkt.

12. Gießvorrichtung nach einem der Ansprüche 2 bis 11, **dadurch gekennzeichnet, dass** ein Lagesensor (37) zur Erfassung der Position des zweiten Kupplungsblockes (33) ausgebildet ist.

13. Gießvorrichtung nach einem der vorhergehenden Ansprüche, **dadurch gekennzeichnet, dass** das erste Kupplungsteil (23) oder der erste Kupplungsblock (32) an einer Aufnahmeplatte (19) für das obere Gussformteil (10) angeordnet ist und dass das zweite Kupplungsteil (24) oder der zweite Kupplungsblock (33) am Kühlmediumschlauch (21) angeordnet ist, wobei das zweite Kupplungsteil (24) oder der zweite Kupplungsblock (33) mittels dem Aktor (26) zwischen einer Einkuppelstellung (27) und einer Auskuppelstellung (28) verschiebbar ist.

14. Gießvorrichtung nach einem der vorhergehenden Ansprüche, **dadurch gekennzeichnet, dass** mehrere der Kühlmediumschläuche (21) zum Zuführen des frischen Kühlmediums in einem gemeinsamen zweiten Kupplungsblock (33) zusammengefasst sind und dass mehrere der Kühlmediumschläuche (21) zum Abführen des bereits durch das Gussformteil (9, 10) geführten Kühlmediums in einem weiteren gemeinsamen zweiten Kupplungsblock (33) zusammengefasst sind.

15. Gießvorrichtung nach einem der vorhergehenden Ansprüche, **dadurch gekennzeichnet, dass** in den Kupplungsteilen (23, 24) ein Verschlussventil angeordnet ist, welches im nicht gekuppelten Zustand der Kupplungsteile (23, 24) einen Mediumaustritt aus den Kupplungsteilen (23, 24) verhindert.

16. Verfahren zum Manipulieren eines Gussformteiles (9, 10) an einer Gießvorrichtung (1) nach einem der vorhergehenden Ansprüche, **dadurch gekennzeichnet, dass** das erste Kupplungsteil (23) und das zweite Kupplungsteil (24) vor dem Manipulieren des Gussformteiles (9, 10) automatisiert ausgekuppelt werden.

17. Verfahren nach Anspruch 16, **dadurch gekennzeichnet, dass** die Kupplungsteile (23, 24) vor dem Auskuppeln mit einem Gas durchspült werden.

18. Verfahren nach Anspruch 16 oder 17, **dadurch gekennzeichnet, dass** das Manipulieren des Gussformteiles (9, 10) darin besteht, dass dieses um eine Schwenkachse (43) geschwenkt wird.

## Claims

1. A casting device (1) for casting under pressure, in particular a counter-pressure die casting device or a low-pressure die casting device, comprising:
- a furnace (2), in which a receiving space (3) for receiving melt (4) is formed, wherein the receiving space (3) can be supplied with compressed air;
- a mold (8), which comprises a lower mold part (9) and an upper mold part (10), wherein the two mold parts (9, 10) form a mold cavity (11) when assembled, wherein at least one of the two mold parts (9, 10) has a media channel (20) for supplying a cooling medium, wherein the media channel (20) is fluidically connected to at least one cooling medium hose (21);
- an intermediate plate (7), which is arranged between the furnace (2) and the mold (8);
- at least one riser tube (12) for conducting melt (4), by means of which riser tube (12) the receiving space (3) of the furnace (2) is fluidically connected to the mold cavity (11) of the mold (8);
wherein
a coupling (22) having a first coupling part (23) and a second coupling part (24) is formed between the cooling medium hose (21) and the media channel (20), **characterized in that** the coupling (22) can be automatically coupled and uncoupled by means of an actuator (26).

2. The casting device according to claim 1, **characterized in that** multiple first coupling parts (23) are combined into a first coupling block (32) and multiple second coupling parts (24) are combined into a second coupling block (33), wherein the first coupling block (32) and the second coupling block (33) can be automatically coupled and uncoupled by means of the actuator (26).

3. The casting device according to claim 1 or 2, **characterized in that** the first coupling part (23) or the first coupling block (32) is arranged at the intermediate plate (7), and that the second coupling part (24) or the second coupling block (33) is arranged at the cooling medium hose (21), wherein the second coupling part (24) or the second coupling block (33) can be moved between a coupling position (27) and a uncoupling position (28) by means of an actuator (26).

4. The casting device according to claim 3, **characterized in that** the first coupling part (23) is arranged at a circumferential surface (25) of the intermediate plate (7), wherein the first coupling block (32) is formed by a segment of the intermediate plate (7).

5. The casting device according to claim 4, **characterized in that** multiple first coupling blocks (32) are arranged so as to be distributed across the circumferential surface (25) of the intermediate plate (7), wherein a second coupling block (33) is assigned to each of the first coupling blocks (32), each which second coupling blocks (33) is coupled with a separate actuator (26).

6. The casting device according to one of the preceding claims, **characterized in that** the intermediate plate (7) has at least one connecting channel (29), which extends from the first coupling part (23) to a coupling region (30) with the lower mold part (9), wherein in the coupling region (30), the connecting channel (29) of the intermediate plate (7) opens into the media channel (20) of the lower mold part (9).

7. The casting device according to one of the preceding claims, **characterized in that** the actuator (26) is designed in the form of a working cylinder.

8. The casting device according to one of the preceding claims, **characterized in that** the actuator (26) is effective in the radial direction of the intermediate plate (7).

9. The casting device according to one of claims 6 to 8, **characterized in that** the first coupling part (23) or the first coupling block (32) is arranged at the lower mold part (9), and that the second coupling part (24) or the second coupling block (33) is arranged at the cooling medium hose (21), wherein the second coupling part (24) or the second coupling block (33) can be moved between a coupling position (27) and a uncoupling position (28) by means of an actuator (26).

10. The casting device according to one of claims 2 to 9, **characterized in that** further media channels (34), such as power lines for sensors, are also coupled in the coupling blocks (32, 33).

11. The casting device according to one of the preceding claims, **characterized in that** a guide pin (35) is arranged in one of the coupling blocks (32, 33), which guide pin (35) cooperates with a guide recess (36) in the corresponding coupling block (32, 33).

12. The casting device according to one of claims 2 to 11, **characterized in that** a position sensor (37) for detecting the position of the second coupling block (33) is formed.

13. The casting device according to one of the preceding claims, **characterized in that** the first coupling part (23) or the first coupling block (32) is arranged at an receiving plate (19) for the upper mold part (10), and that the second coupling part (24) or the second coupling block (33) is arranged at the cooling medium hose (21), wherein the second coupling part (24) or the second coupling block (33) can be moved between a coupling position (27) and a uncoupling position (28) by means of an actuator (26).

14. The casting device according to one of the preceding claims, **characterized in that** multiple of the cooling medium hoses (21) for supplying the fresh cooling medium are combined in a common second coupling block (33), and that multiple of the cooling medium hoses (21) for discharging the cooling medium that has already passed through the mold part (9, 10) are combined in a further common second coupling block (33).

15. The casting device according to one of the preceding claims, **characterized in that** a closing valve is arranged in the coupling parts (23, 24), which closing valve prevents a medium discharge out of the coupling parts (23, 24) when the coupling parts (23, 24) are in a coupled state.

16. A method for manipulating a mold part (9, 10) on a casting device (1) according to one of the preceding claims, **characterized in that** the first coupling part (23) and the second coupling part (24) are automatically uncoupled before the mold part (9, 10) is manipulated.

17. The method according to claim 16, **characterized in that** the coupling parts (23, 24) are flushed with a gas before uncoupling.

18. The method according to claim 16 or 17, **characterized in that** the manipulation of the mold part (9, 10) consists in pivoting it about a pivot axis (43).

## Revendications

1. Dispositif de coulée (1) pour la coulée sous pression, plus particulièrement dispositif de coulée en coquille à contre-pression ou dispositif de coulée en coquille à basse pression, comprenant :
- un four (2) dans lequel est réalisé un espace de logement (3) pour le logement d'une fonte (4), dans lequel l'espace de logement (3) peut être alimenté en air comprimé ;
- un moule de coulée (8), qui comprend une partie inférieure du moule de coulée (9) et une partie supérieure du moule de coulée (10), dans lequel les deux parties de moule de coulée (9, 10) forme, dans l'état assemblé, une cavité de moule (11), dans lequel au moins une des deux parties de moule de coulée (9, 10) comprend un canal de fluide (20) pour le guidage d'un fluide de refroidissement, dans lequel le canal de fluide (20) est en communication fluidique avec au moins un tuyau de fluide de refroidissement (21) ;
- une plaque intermédiaire (7), qui est disposée entre le four (2) et le moule de coulée (8) ;
- au moins un tube ascendant (12) pour le guidage de la fonte (4), au moyen duquel l'espace de logement (3) du four (2) est en communication fluidique avec la cavité de moule (11) du moule de coulée (8) ;
dans lequel
entre le tuyau de fluide de refroidissement (21) et le canal de fluide (20), est réalisé un couplage (22) avec une première partie de couplage (23) et une deuxième partie de couplage (24),
**caractérisé en ce que** le couplage (22) peut être accouplé et désaccouplé de manière automatisée au moyen d'un actionneur (26).

2. Dispositif de coulée selon la revendication 1, **caractérisé en ce que** plusieurs premières parties de couplage (23) sont regroupées en un premier bloc de couplage (32) et plusieurs deuxièmes parties de couplage (24) sont regroupées en un deuxième bloc de couplage (33), dans lequel le premier bloc de couplage (32) et le deuxième bloc de couplage (33) peuvent être accouplés et désaccouplés de manière automatisée au moyen de l'actionneur (26).

3. Dispositif de coulée selon la revendication 1 ou 2, **caractérisé en ce que** la première partie de couplage (23) ou le premier bloc de couplage (32) est disposé sur la plaque intermédiaire (7) et **en ce que** la deuxième partie de couplage (24) ou le deuxième bloc de couplage (33) est disposé sur le tuyau de fluide de refroidissement (21), dans lequel la deuxième partie de couplage (24) ou le deuxième bloc de couplage (33) peut être coulissé, au moyen de l'actionneur (26), entre une position d'accouplement (27) et une position de désaccouplement (28).

4. Dispositif de coulée selon la revendication 3, **caractérisé en ce que** la première partie de couplage (23) et disposée sur une surface circonférentielle (25) de la plaque intermédiaire (7), dans lequel le premier bloc de couplage (32) est constitué d'une portion de la plaque intermédiaire (7).

5. Dispositif de coulée selon la revendication 4, **caractérisé en ce que** plusieurs premiers blocs de couplage (32) sont disposés de manière répartie sur la surface circonférentielle (25) de la plaque intermédiaire (7), dans lequel, à chacun des premiers blocs de couplage (32) correspond un deuxième bloc de couplage (33) qui est couplé respectivement avec son propre actionneur (26).

6. Dispositif de coulée selon l'une des revendications précédentes, **caractérisé en ce que** la plaque intermédiaire (7) comprend au moins un canal de liaison (29) qui s'étend de la première partie de couplage (23) vers une zone de couplage (30) avec la partie inférieure du moule de coulée (9), dans lequel, dans la zone de couplage (30), le canal de liaison (29) de la plaque intermédiaire (7) débouche dans le canal de fluide (20) de la partie inférieure du moule de coulée (9).

7. Dispositif de coulée selon l'une des revendications précédentes, **caractérisé en ce que** l'actionneur (26) se présente sous la forme d'un vérin de travail.

8. Dispositif de coulée selon l'une des revendications précédentes, **caractérisé en ce que** l'actionneur (26) agit dans la direction radiale de la plaque intermédiaire (7).

9. Dispositif de coulée selon l'une des revendications 6 à 8, **caractérisé en ce que** la première partie de couplage (23) ou le premier bloc de couplage (32) est disposé sur la partie inférieure du moule de coulée (9) et **en ce que** la deuxième partie de couplage (24) ou le deuxième bloc de couplage (33) est disposé sur le tuyau de fluide de refroidissement (21), dans lequel la deuxième partie de couplage (24) ou le deuxième bloc de couplage (33) peut être coulissé, au moyen de l'actionneur (26), entre une position d'accouplement (27) et une position de désaccouplement (28).

10. Dispositif de coulée selon l'une des revendications 2 à 9, **caractérisé en ce que**, dans les blocs de couplage (32, 33), sont également couplés d'autres conduites (34), comme des lignes électriques pour des capteurs.

11. Dispositif de coulée selon l'une des revendications précédentes, **caractérisé en ce que**, dans un des blocs de couplage (32, 33), est disposé un axe de guidage (35) qui interagit avec un évidement de guidage (36) dans le bloc de couplage (32, 33) correspondant.

12. Dispositif de coulée selon l'une des revendications 2 à 11, **caractérisé en ce qu'**un capteur de position (37) est conçu pour la détection de la position du deuxième bloc de couplage (33).

13. Dispositif de coulée selon l'une des revendications précédentes, **caractérisé en ce que** la première partie de couplage (23) ou le premier bloc de couplage (32) est disposé sur une plaque de logement (19) pour la partie supérieure du moule de coulée (10) et **en ce que** la deuxième partie de couplage (24) ou le deuxième bloc de couplage (33) est disposé sur le tuyau de fluide de refroidissement (21), dans lequel la deuxième partie de couplage (24) ou le deuxième bloc de couplage (33) peut être coulissé au moyen de l'actionneur (26) entre une position d'accouplement (27) et une position de désaccouplement (28).

14. Dispositif de coulée selon l'une des revendications précédentes, **caractérisé en ce que** plusieurs des tuyaux de fluide de refroidissement (21) pour l'introduction du fluide de refroidissement frais sont regroupés dans un deuxième bloc de couplage (33) commun et **en ce que** plusieurs des tuyaux de fluide de refroidissement (21) pour l'évacuation du fluide de refroidissement déjà guidé à travers la partie du moule de coulée (9, 10) sont regroupés en un autre deuxième bloc de couplage (33) commun.

15. Dispositif de coulée selon l'une des revendications précédentes, **caractérisé en ce que**, dans les parties de couplage (23, 24), est disposée une partie de fermeture qui empêche, dans l'état non couplé des parties de couplage (23, 24), une sortie du fluide des parties de couplage (23, 24).

16. Procédé de manipulation d'une partie de moule de coulée (9, 10) sur un dispositif de coulée (1) selon l'une des revendications précédentes, **caractérisé en ce que** la première partie de couplage (23) et la deuxième partie de couplage (24) sont automatiquement désaccouplées avant la manipulation de la partie de moule de coulée (9, 10).

17. Procédé selon la revendication 16, **caractérisé en ce que** les parties de couplage (23, 24) sont rincées avec un gaz avant le désaccouplement.

18. Procédé selon la revendication 16 ou 17, **caractérisé en ce que** la manipulation de la partie de moule de coulée (9, 10) consiste à faire pivoter celle-ci autour d'un axe de pivotement (43).
